# EUROPÄISCHE PATENTSCHRIFT

(11) **EP 3 781 372 B1**
(45) Veröffentlichungstag und Bekanntmachung des Hinweises auf die Patenterteilung: **17.01.2024**
(21) Anmeldenummer: 19719263.6
(22) Anmeldetag: 20.04.2019
(51) Int. Cl.: B28B 1/00, B28B 3/20, B28B 23/02, E04G 21/04, B33Y 80/00

(54) **VERFAHREN ZUR HERSTELLUNG EINES BAUTEILS AUS AUSHÄRTBAREM MATERIAL**
METHOD FOR PRODUCING A COMPONENT FROM CURABLE MATERIAL
PROCÉDÉ DE FABRICATION D'UNE PIÈCE À PARTIR D'UN MATÉRIAU DURCISSABLE

(30) Priorität: 20.04.2018 DE 102018109501
(43) Veröffentlichungstag der Anmeldung: 24.02.2021
(73) Patentinhaber: PERI SE, 89264 Weißenhorn (DE)
(72) Erfinder: MAYER, Juergen, 89264 Weissenhorn (DE)
(74) Vertreter: K & H Bonapat Patentanwälte Koch · von Behren & Partner mbB
(86) Internationale Anmeldenummer: PCT/EP2019/060249
(87) Internationale Veröffentlichungsnummer: WO 2019/202156

(56) Entgegenhaltungen:
- WO-A1-2015/197910
- US-A1- 2015 069 656
- US-B2- 7 837 378

## Beschreibung

Die Erfindung betrifft ein Verfahren zur Herstellung eines Bauteils aus aushärtbarem Material nach dem Oberbegriff des Anspruchs 1.

Auch in Industrieländern beruht die Herstellung von Bauwerken aus Beton noch größtenteils auf handwerklichen Leistungen. Prinzipiell können solche Bauwerke oder Teile dieser Bauwerke auf zwei verschiedene Weisen hergestellt werden. Zum Einen kann man vor Ort mit Schalungen arbeiten, welche dann mit sogenanntem Ortbeton ausgegossen werden, wobei bei tragenden Teilen zusätzlich Bewehrungen eingebracht werden können. Anschließend wird gewartet, bis der Beton teilweise oder vollständig ausgehärtet ist, worauf die Schalungen entfernt, gereinigt und dann wieder verwendet werden können. Das Verfahren ist zeitaufwendig und erfordert den Einsatz einer Vielzahl von Mitarbeitern an der Baustelle.

Eine andere Methode besteht darin, die Betonteile des Bauwerks vorher in einer Fabrik zu gießen, also als Fertigbauteile zu erstellen und als solche an die Baustelle zu liefern. Es können hier nicht nur Wände oder Bodenbestandteile, sondern ganze Raumzellen als Fertigteile aus Beton hergestellt und an die Baustelle geliefert werden. Dieses Verfahren ist preisgünstiger, hat jedoch einen hohen Standardisierungsgrad und eignet sich somit nur für die Herstellung einer Vielzahl von gleichen oder gleichartigen Bauwerken oder für sehr große Strukturen, welche eine Vielzahl gleicher Raumzellen benötigen. Eine individuelle Bauweise ist wiederum nur mit hohem Kostenaufwand möglich.

Ausgehend von diesen bekannten Techniken hat sich auch in der Herstellung von Bauwerken aus Beton in jüngster Zeit ein sogenanntes additives Herstellungsverfahren herausgebildet, nämlich das 3D-Drucken von Beton. Hierbei wird das Bauwerk an einem Computer entworfen und die Daten werden anschließend an einen Drucker weitergeleitet. Bei dem Drucker handelt es sich um einen vollautomatischen Portalroboter, der größer als das zu erstellende Gebäude bzw. Gebäudeteil ist. Anstelle von Portalrobotern können auch Mehrachs- oder Konsolroboter oder Mobilroboter eingesetzt werden. Dieser weist einen Druckkopf und Betonzuführungen auf, über welche der Ortbeton dem Druckkopf zugeführt wird. Dieser Druckkopf gießt sodann das zu erstellende Bauwerk bzw. dessen Wände in mehreren Lagen übereinander, wobei jede Lage eine Stärke zwischen 1 und 10 cm aufweist. Der verwendete Beton ist hierbei zähflüssig genug, um die Stabilität bis zum Aushärten, zumindest jedoch bis zum Anhärten zu halten. Auf diese Weise gießt der Druckkopf eine Wand in mehreren, übereinander angeordneten Lagen.

Problematisch ist bei der Erstellung von Bauwerken mittels 3D-Druckverfahren die Bewehrung der Wände. Es können prinzipiell fertige Stahlgerüste oder ähnliche Bewehrungselemente mit eingebracht werden, jedoch kann dies erst erfolgen, wenn die Wand zumindest teilweise gedruckt ist, da die Bewehrungselemente ansonsten die Bewegung des Druckkopfes stören bzw. verhindern würden. Wartet man allerdings ab, bis die Wand vollständig gedruckt ist, sind die unteren Lagen des Betons bereits ganz oder weitgehend ausgehärtet, sodass nachträglich keine Bewehrungselemente mehr eingebracht werden können.

Die CN 106313272 A beschreibt ein 3D-Druckverfahren zur Herstellung von Betonbauwerken, wobei der Beton mit Fasermaterialien bewehrt ist und wobei mit zwei Druckköpfen gearbeitet wird, von denen einer den Beton und der andere Stahlelemente druckt. Hierbei übergreifen die eingebrachten Stahlelemente jeweils zwei übereinander liegende Lagen des Betons und verbinden diese somit. Ferner zeigen die Dokumente US 7,837,378 B2, das den Oberbegriff des Anspruchs 1 offenbart, und WO 2015/197910

A1 ein jeweiliges 3D-Druckverfahren für eine sog. "verlorene Schalung", bei dem ein in Segmente unterteilter Druckkopf auf Schalungswänden entlanggeführt wird um den zwischenliegenden Raum zu verfüllen. Eine aus Einzel-Armierungselementen gebildete Gesamtarmierung soll dabei zur Stabilität der entstehenden Schalung verhelfen.

Nachteilig ist generell, dass nur eine punktuelle Verbindung benachbarter Betonschichten möglich ist, jedoch keine großflächige Armierung, wie diese in klassischen Herstellungsverfahren z.B. mit Stahlmatten möglich ist.

Es besteht die Aufgabe, ein Verfahren zur Herstellung eines Bauteils aus aushärtbarem Material, insbesondere Beton, so auszubilden, dass seine Bewehrung hohen Belastungen stand hält.

Gelöst wird diese Aufgabe mit den kennzeichnenden Merkmalen des Anspruchs 1.

Einige Ausführungsbeispiele der Erfindung werden im Folgenden anhand der begleitenden Zeichnungen länger erläutert. Diese zeigen:
- **Fig. 1:**: Einen Querschnitt durch ein teilweise erstelltes Bauteil nach dem erfindungsgemäßen Verfahren in einer ersten Variante (a) und einer zweiten Variante (b);
- **Fig. 2:**: eine perspektivische Darstellung des Verfahrens mit einem ersten Druckkopf, das nicht Teil der Erfindung ist;
- **Fig. 3:**: eine Darstellung gemäß Fig. 2 mit einem zweiten Druckkopf;
- **Fig. 4:**: eine Darstellung gemäß Fig. 2 und 3 mit einem dritten Druckkopf;
- **Fig. 5:**: eine schematische Darstellung einer ersten Variante der Verbindung benachbarter Bewehrungselemente;
- **Fig. 6:**: eine Darstellung gemäß Fig. 5 in einer zweiten Variante;
- **Fig.7:**: eine Darstellung gemäß Fig. 5 in einer dritten Variante;
- **Fig. 8:**: eine Darstellung gemäß Fig. 5 in einer vierten Variante;
- **Fig. 9:**: eine Darstellung gemäß Fig. 5 in einer fünften Variante;
- **Fig. 10:**: eine Darstellung gemäß Fig. 5 in einer sechsten Variante;
- **Fig. 11:**: eine Darstellung gemäß Fig. 5 in einer siebten Variante;
- **Fig. 12:**: eine Darstellung gemäß Fig. 5 in einer achten Variante;
- **Fig. 13:**: eine Darstellung gemäß Fig. 3 in einer weiteren Variante, die nicht Teil der Erfindung ist.

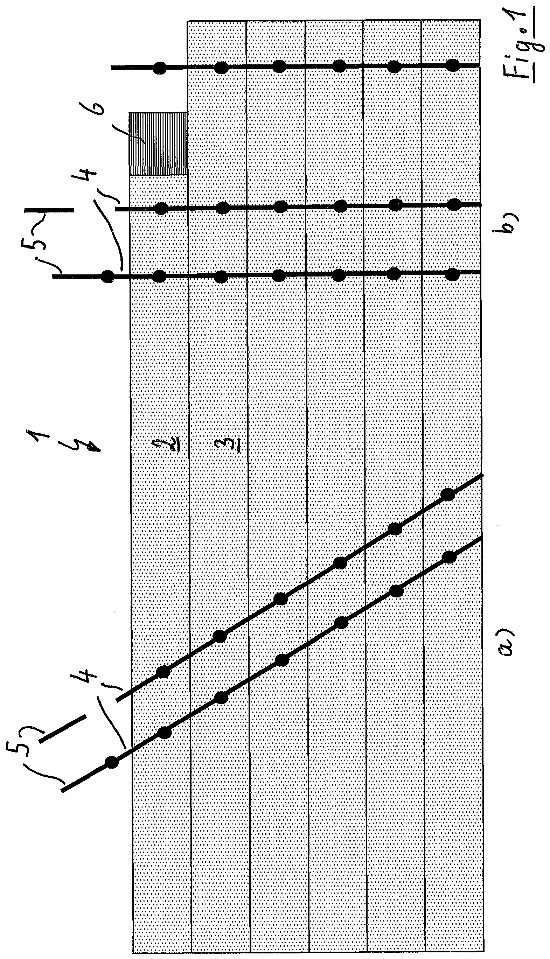

Zur Durchführung des erfindungsgemäßen Verfahrens wird - insoweit in an sich bekannter Weise - ein 3D-Drucker, z.B. in Gestalt eines vollautomatischen Portalroboters, verwendet, welcher eine Wandung oder eine vollständige Raumzelle oder weitere vertikale Einheiten eines Bauwerks in aufeinanderfolgenden Lagen drucken kann. In Figur 1 ist ein Bauteil 1 im Entstehungsprozess dargestellt, welches aus mehreren übereinander gedruckten Lagen aus Beton besteht, wobei die oberste Lage mit der Bezugszahl 2 und die unmittelbar darunterliegende Lage mit der Bezugszahl 3 versehen ist. Hierbei befindet sich die oberste dargestellte Lage 2 noch im Entstehungsprozess, also während des Druckvorgangs. Der Druckkopf 6 ist nur schematisch dargestellt.

Figur 1 zeigt zwei Varianten der Einbringung von Bewehrungselementen 4 bzw. 5 in die Lagen 2 bzw. 3 des Bauteils 1.

In beiden dargestellten Varianten wird zunächst eine untere Lage 3 des aushärtbaren Materials, hier Beton, in einem 3D-Druckverfahren gedruckt und anschließend werden mit den aus dieser Lage 3 hervorstehenden, unteren Bewehrungselementen 4 weitere, obere Bewehrungselemente verbunden, die so lang sind, dass sie auch die später darüber zu druckende, obere Lage 2 durchdringen und aus dieser noch ein wenig herausstehen, nachdem der Druckkopf 6 diese obere Lage 2 gedruckt hat. Im nächsten Verfahrensschritt wird die darüber liegende Lage 2 darauf aufgedruckt, wobei, wie oben beschrieben, die unteren Bewehrungselemente 4 über die Oberseite der oberen Lage 2 herausstehen. Im nächsten Verfahrensschritt werden an die aus der oberen Lage 2 hervorstehenden Oberseiten der Bewehrungselemente 4 weitere, gleichartige Bewehrungselemente 5 fest mit den unteren Bewehrungselementen 4 verbunden, bspw. durch eine Schweißverbindung. Weitere Verbindungsarten werden im Folgenden noch beschrieben. Anschließend wird die nächste, in der Figur nicht dargestellte Lage des aushärtbaren Materials in 3D-Druckverfahren auf die oberste Lage 2 aufgebracht und das Verfahren wird periodisch wiederholt. Jedes Bewehrungselement 4 bzw. 5 besteht aus einem starren Material, insbesondere Metall, z.B. Stahl, oder aus einem harten Kunststoff. Die aneinandergeschweißten Bewehrungselemente 4 bzw. 5 bilden einen durchgehenden Strang.

In der in Figur 1 links dargestellten Variante (a) verlaufen die Stränge aus den Bewehrungselementen 4, 5 senkrecht zu den Lagen 2, 3 und in der in Figur 1 rechts dargestellten Variante (b) verlaufen die Stränge aus den Bewehrungselementen 4, 5 in einem Winkel von ca. 60° zu den Lagen 2, 3. Andere Winkel, vorzugsweise zwischen 10° und 90°, sind möglich und je nach Anwendungsgebiet vorteilhaft. Das Verfahren eignet sich auch für andere aushärtende Materialien als Beton, insbesondere thixotrope Materialien.

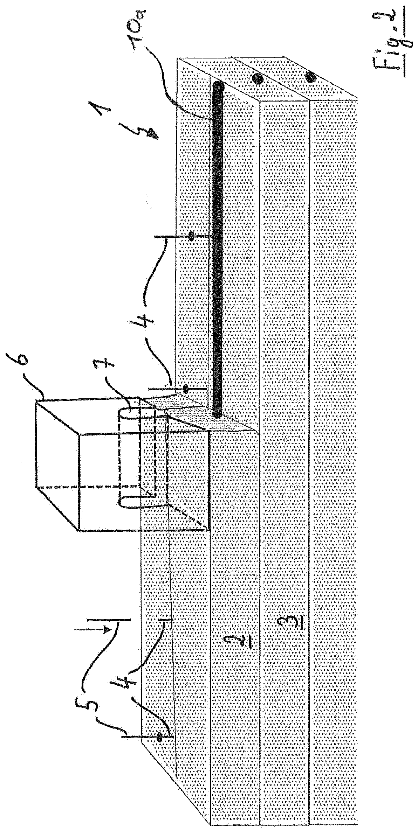

Die Bewehrungselemente 4 stehen immer, wenn der Druckkopf 6 die oberste Lage 2 des aushärtbaren Materials gedruckt hat, so weit aus dieser obersten Lage 2 hervor, dass auch beim Drucken der nächsten Lage noch ein Überstand stattfindet. Daher verwendet man vorzugsweise einen Druckkopf 6, wie er in Fig. 2 dargestellt und nicht Teil der Erfindung ist, mit einer Aussparung 7 für die herausstehenden Bewehrungselemente 4, 5, um diese nicht zu beschädigen oder herauszureißen. Insbesondere eignet sich hierzu ein Druckkopf 6, der zwei Mündungen zum parallelen Auslass zweier nebeneinander liegender Stränge von aushärtbarem Material hat, wobei die beiden Stränge gemeinsam eine Lage bilden. Der Bereich zwischen den beiden Mündungen des Druckkopfes 6 kann frei bleiben und bildet eine Aussparung 7, so dass der Druckkopf 6 auch über die aus den darunterliegenden Lagen 2 und 3 herausstehenden Enden der Bewehrungselemente 4 geführt werden kann.

Nachdem der Druckkopf 6 die oberste Lage 2 gedruckt hat, werden die oberen Bewehrungselemente 5 mit den aus der obersten Lage 2 herausstehenden und bis in die darunterliegende Lage 3 zurückgehenden Bewehrungselementen verbunden, wobei die Art der Verbindung weiter unten beschrieben wird. Anschließend druckt der Druckkopf 6 die nächste Lage.

Nach dem Drucken können auf die Lagen weitere im Wesentlichen horizontale bzw. orthogonal zu den erfindungsgemäß ausgebildeten Bewehrungselementen ausgerichteten Bewehrungselemente 10 aufgebracht, beispielsweise aufgelegt werden. Dabei handelt es sich z.B. um starre Elemente wie Stäbe 10a. Es können jedoch auch Fäden, Ketten, Seile oder dergleichen auf die Lagen aufgelegt werden. Mit Ausbildung der nächsten Lage werden die horizontalen Bewehrungselemente 10, 10a dann überdeckt und erhöhen die Zugfestigkeit des Bauteils in Druckrichtung gesehen. Das Einbringen erfolgt voll-, teilautomatisiert oder manuell. Es muss dabei nicht zwingend in jeder Lage ein horizontal ausgerichtetes Bewehrungselement vorgesehen werden. Auch besteht die Möglichkeit, dass weitere Bewehrungselemente 10, 10a nur in besonders beanspruchten Bereichen zusätzlich eingebracht werden.

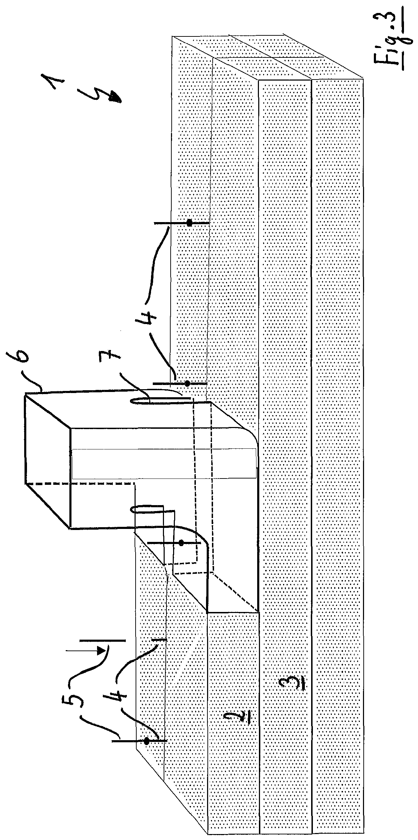

Eine nicht erfindungsgemäße Ausgestaltung eines Druckkopfes bei ansonsten gleichen Verfahrensparametern ist in Figur 3 dargestellt. Der Druckkopf 6 gemäß Figur 3 unterscheidet sich von dem Druckkopf 6 gemäß Figur 2 dadurch, dass die beiden Auslässe des aushärtbaren Materials um 90° nach hinten gekrümmt sind, der Auslass des aushärtbaren Materials also nicht senkrecht nach unten, sondern in Richtung der soeben gedruckten Lage 2 und entgegen der Bewegungsrichtung des Druckkopfes 6 erfolgt. Auch in diesem Fall weist der Druckkopf 6 eine Aussparung 7 auf, durch welche die aus den darunterliegenden Lagen 2, 3 herausstehenden Bewehrungselemente 4 hindurch treten können, wenn sich der Druckkopf 6 darüber hinweg bewegt.

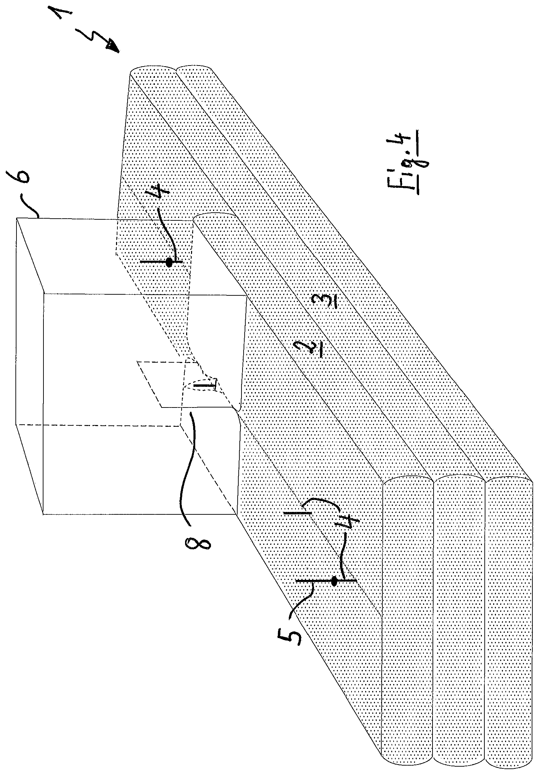

Die erfindungsgemäße Ausführungsform zur Durchführung des Verfahrens mit einem flexiblen Druckkopf 6 zeigt Figur 4. Der in Figur 4 dargestellt Druckkopf 6 weist keine Aussparung 7 auf, sondern einen Mittelbereich 8, der flexibel gestaltet ist, so dass sich die aus den beiden darunterliegenden Lagen 2, 3 hervorstehenden Bewehrungselemente 4 während des Überfahrens durch den Druckkopf flexibel an dessen Innenseite anschmiegen. Die flexible Gestaltung des Druckkopfes 6 kann durch Wahl eines geeigneten Materials im Bereich des Mittelbereichs 8 erfolgen, z. B. durch ein Kunststoff-, Silikon- oder Gummimaterial. In der Figur 4 ist schematisch dargestellt, wie ein Bewehrungselement 4 sich genau in der Mitte des Mittelbereichs 8 befindet und von dem dort vorhandenen flexiblen Material des Druckkopfes 6 umschlossen wird. Mithilfe des flexiblen Mittelbereichs 8 des Druckkopfes 6 können Positionierungsfehler der Bewehrungselemente 4 flexibel ausgeglichen werden. Die Bewehrungselemente 4 stoßen in diesem Fall nicht gegen einen starren Druckkopf 6, da die flexible Durchführung sich zu einem gewissen Grad anpasst. Zusätzlich können die beiden, den Druckkopf 6 verlassenden Stränge des aushärtbaren Materials näher aneinander gedruckt werden. Falls ein Bewehrungselement 4 den Druckkopf 6 passiert, schmiegt sich die Durchführung im Mittelbereich 8 an das Bewehrungselement 4 an, was die Anbettung des Bewehrungselements 4 in das aushärtbare Material verbessert.

In allen Ausführungsbeispielen gemäß Figuren 2, 3 und 4 hat der Druckkopf 6 zwei Auslässe für das aushärtbare Material, wobei ein Auslass links und ein Auslass rechts der Aussparung 7 bzw. des Mittelbereichs 8 angeordnet ist. Auf diese Weise wird jede Lage 2 bzw. 3 in zwei nebeneinander liegende Lagen aufgespalten, die sich im Idealfall aber nach Durchführung des Druckvorgangs innig miteinander vermengen, so dass keine Grenzfläche mehr erkennbar ist.

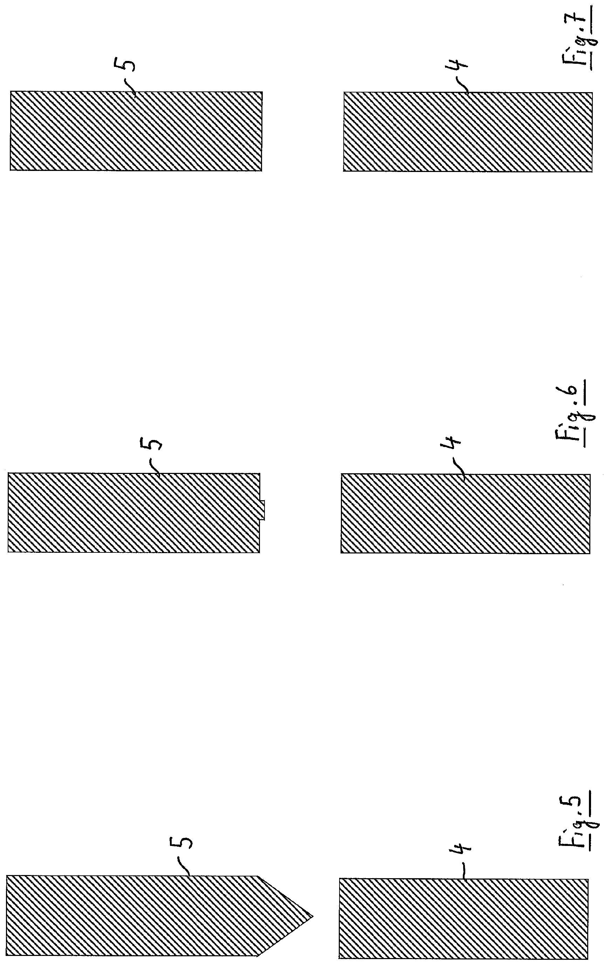

Die Verbindung benachbarter unterer Bewehrungselemente 4 mit darüber angeordneten oberen Bewehrungselementen 5 ist in verschiedenen Varianten in den Figuren 5-12 dargestellt. Die in den Figuren 5, 6 und 7 dargestellten Varianten sind vor allem für Schweißverfahren, insbesondere das Bolzenschweißverfahren günstig. Hier kann das obere Bewehrungselement 5 in an sich bekannter Weise mit dem unteren Bewehrungselement 4 durch eine Schweißverbindung verbunden werden. In der Ausführungsform gemäß Figur 5 weist das obere Bewehrungselement 5 an seiner Unterseite einen spitzen Winkel zur besseren Schweißverbindung mit der ebenen Oberfläche des unteren Bewehrungselements 4 auf.

Bei der Ausführungsform nach Figur 6 weist das obere Bewehrungselement im Mittelbereich seiner Unterseite eine Art hervorstehenden Knopf auf, während die Oberseite des unteren Bewehrungselements 4 plan ist.

Bei der Variante gemäß Figur 7 ist sowohl die Unterseite des oberen Bewehrungselements 5 als auch die Oberseite des unteren Bewehrungselements 4 plan, so dass eine unmittelbare Bolzenschweißverbindung möglich ist.

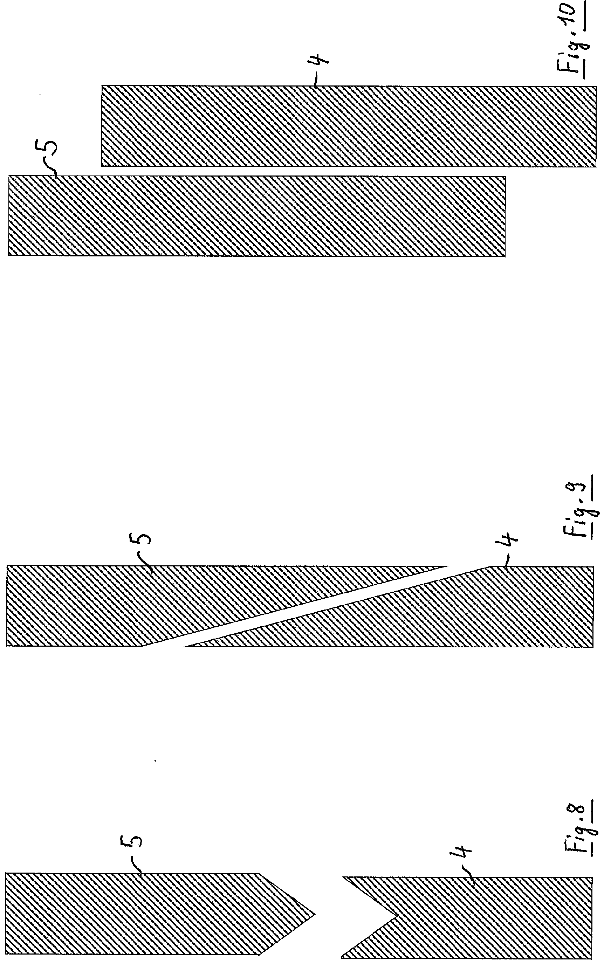

In den Figuren 8-10 sind mögliche Klebeverbindungen dargestellt. In Figur 8 wird der Klebstoff hierbei zwischen die spitz ausgeführte Unterseite des oberen Bewehrungselements 5 und die im Gegenzug schwalbenschwanzförmig ausgeführte obere Seite des unteren Bewehrungselements 4 eingebracht, bevor das obere Bewehrungselement 5 unter Druck auf das untere Bewehrungselement 4 gebracht wird.

Bei der Ausführungsform gemäß Figur 9 wird der Klebstoff in den Spalt zwischen dem spitz zulaufenden unteren Ende des oberen Bewehrungselements 5 und dem komplementär hierzu ausgebildeten spitz zulaufenden oberen Ende des unteren Bewehrungselements 4 eingebracht.

Bei Ausführungsform gemäß Figur 10 findet eine Überlappung des oberen Bewehrungselements 5 mit dem unteren Bewehrungselement 4 statt, wobei sich die Seitenflächen überlappen und in den Überlappungsbereich ein Klebstoff eingebracht wird.

Auch alle Varianten gemäß Figuren 8 -10 dienen nicht nur der Klebeverbindung. Bei diesen Varianten kann auch eine Schweißverbindung der benachbarten Bewehrungselemente 4 bzw. 5 erfolgen.

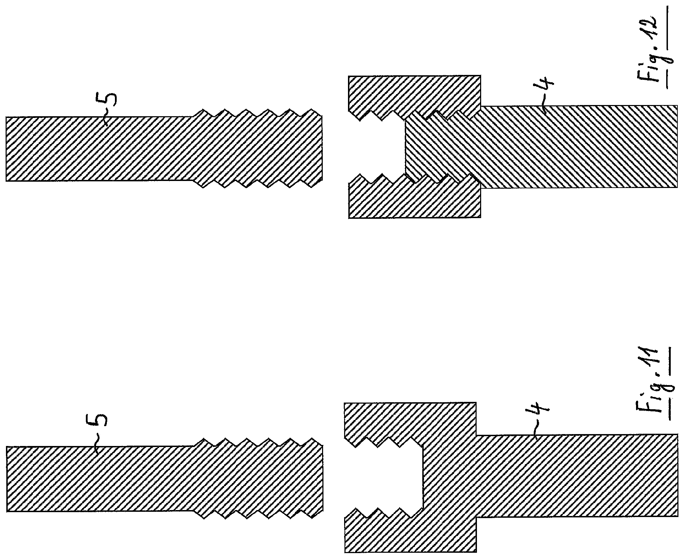

Zwei weitere Verbindungsmöglichkeiten sind in den Figuren 11 und 12 dargestellt. Hierbei findet eine Verschraubung statt. Bei der Ausführungsform gemäß Figur 11 weist das obere Ende des unteren Bewehrungselements 4 eine integrierte Schraubenmutter mit einem Innengewinde auf, während der untere Bereich des oberen Bewehrungselements 5 ein Außengewinde aufweist, welches in diese integrierte Schraubenmutter des unteren Bewehrungselements 4 eingedreht werden kann.

Bei der Ausführungsform gemäß Figur 12 weisen sowohl der obere Bereich des unteren Bewehrungselements 4 als auch der untere Bereich des oberen Bewehrungselements 5 Außengewinde auf und es wird eine Überwurfmutter mit einem Innengewinde verwendet, in welches die beiden Außengewinden der Bewehrungselemente 4-5 zur Herstellung einer sicheren Verbindung eingedreht werden.

Anstelle der Verbindung benachbarter Bewehrungselemente 4 durch Verschweißen kann auch eine Verbindung durch Verschrauben oder durch Verkleben erfolgen. Bei einer Schraubverbindung können die Enden der Bewehrungselemente 4 mit jeweils einem Außengewinde versehen sein, wobei eine gemeinsame Überwurfmutter die beiden Enden miteinander verbindet. Auch kann ein Ende eines Bewehrungselements 4 ein Innengewinde enthalten, während das benachbarte Bewehrungselement 4 ein hierzu passendes Außengewinde aufweist. Falls die benachbarten Bewehrungselemente 4 miteinander verklebt werden, empfiehlt es sich, eine großflächige Abschlussfläche vorzusehen, so dass eine gute Klebeverbindung möglich wird.

Das erfindungsgemäße Verfahren und das damit erstellte Bauteil haben den Vorteil einer wesentlich innigeren Verbindung der Bewehrungselemente 4 und einer wesentlich festeren Bewehrung, da durch die Stränge 5 aus einzelnen Bewehrungselementen 4 eine ähnliche Wirkung erzielt werden kann, wie beim klassischen Betonguss durch Verwendung einer Stahlmatte. Durch die erfindungsgemäße Bildung von Strängen 5 aus einzelnen Bewehrungselementen 4 wird es möglich, auch im 3D-Druck, wo eine durchgängige Stahlmatte nicht eingesetzt werden kann, die gleichen oder ähnliche Festigkeitswerte zu erzielen wie bei der Verwendung durchgehender Baustahlmatten im Betongussverfahren.

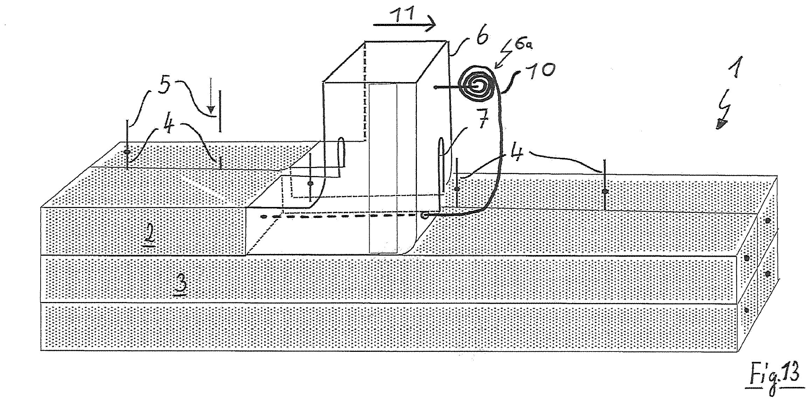

Im erfindungsgemäßen Verfahren können in einer vorteilhaften Weiterbildung zusätzliche Bewehrungselemente 10 während oder nach dem Drucken eingesetzt werden. Diese können insbesondere als Draht, Stab, Seil, Kette oder Roving ausgebildet sein. Das erfindungsgemäße Verfahren und die zusätzlichen ausgebildeten Bewehrungselemente 10 wie Draht, Stab, Seil, Kette oder Roving, haben den Vorteil, dass die Zug- und Druckfestigkeit des gebildeten Bauteils erhöht wird. Insbesondere in Druckrichtung werden hierdurch die Festigkeiten erhöht. Die zusätzlichen Bewehrungselemente 10 wie Draht, Stab, Seil, Kette oder Roving können während oder nach dem Drucken in das extrudierte aushärtbare Material, insbesondere in eine Druckrichtung 11, eingebracht werden. Wie in Figur 13 ersichtlich, kann der Druckkopf 6 zusätzliche Mittel umfassen, über die das zusätzliche Bewehrungselement 10 während des Druckens mit eingebracht wird. So können beispielweise Drähte, Seile, Ketten oder Rovings von einer Spule 6a abgerollt werden, die gleichzeitig mit dem Druckkopf 6 in Druckrichtung bewegt wird. Stäbe können in an und für sich bekannter Weise unterstützt durch den Druckkopf 6 oder hiervon unabhängig zugeführt, beispielsweise aufgelegt oder eingesteckt werden (nicht abgebildet). Alternativ hierzu kann ein zusätzliches Mittel gemäß Figur 2 zur Verfügung gestellt werden, über das die zusätzlichen Bewehrungsmittel 10 auf den gebildeten Lagen 2, 3 auf - oder eingelegt werden. Alternativ zum Stab kann ein flexibles Element Seil, Kette, Rovings aufgelegt oder eingesteckt werden

In einer weiteren, als günstig angesehene Ausführungsform können zusätzliche Fasern, insbesondere Polymerfasern, Glasfasern oder Carbonfasern in das extrudierte aushärtbare Material beigemischt werden. Hierdurch wird die Festigkeit weiter erhöht.

## Patentansprüche

1. Verfahren zur Herstellung eines Bauteils (1) aus einem aushärtbaren Material, wobei in sich periodisch wiederholenden Schritten eine neue Lage (2) des Materials in einem 3D-Druckverfahren auf eine darunter liegende Lage (3) mit unteren Bewehrungselementen (4) gedruckt wird, welche über die Oberseite dieser neuen Lage (2) hervorstehen, wobei nach dem Drucken j eder Lage (3) obere Bewehrungselemente (5) in Verlängerung der unteren Bewehrungselemente (4) mit diesen verbunden werden, welche die unteren Bewehrungselemente der darauf folgenden Lage bilden, **dadurch gekennzeichnet, dass** ein Druckkopf (6) keine Aussparung, sondern einen Mittelbereich (8) aufweist, der flexibel gestaltet ist, so dass sich die aus den beiden darunterliegenden Strängen einer Lage (2, 3) hervorstehenden Bewehrungselemente (4) während des Überfahrens durch den Druckkopf (6) flexibel an dessen Innenseite anschmiegen, wobei die flexible Gestaltung des Druckkopfes (6) durch Wahl eines geeigneten Materials im Bereich des Mittelbereichs (8) erfolgt, wie z. B. durch ein Kunststoff-, Silikon- oder Gummimaterial.

2. Verfahren nach Anspruch 1, **dadurch gekennzeichnet, dass** das aushärtbare Material Beton ist.

3. Verfahren nach einem der voranstehenden Ansprüche, **dadurch gekennzeichnet, dass** die Bewehrungselemente (4, 5) aus einem starren Material, insbesondere Stahl oder Kunststoff, bestehen.

4. Verfahren nach einem der voranstehenden Ansprüche, **dadurch gekennzeichnet, dass** die Verbindung übereinanderliegender Bewehrungselemente (4, 5) eine Schweißverbindung oder eine Schraubverbindung oder eine Klebeverbindung ist.

5. Verfahren nach einem der vorstehenden Ansprüche, **dadurch gekennzeichnet, dass** die Bewehrungselemente (4, 5) senkrecht zu den Lagen (2, 3) verlaufen.

6. Verfahren nach einem der Ansprüche 1 bis 4, **dadurch gekennzeichnet, dass** die Bewehrungselemente (4, 5) in einem Winkel zwischen 90° und 45° zu den Lagen (2, 3) verlaufen.

7. Verfahren nach einem der voranstehenden Ansprüche, **dadurch gekennzeichnet, dass** die Bewehrungselemente (4, 5) stabförmig sind.

8. Verfahren nach einem der vorstehenden Ansprüche, **dadurch gekennzeichnet, dass** wenigstens ein zusätzliches Bewehrungselement (10) in eine Druckrichtung (11) verlaufend in die Lagen (2, 3) eingebracht wird.

9. Verfahren nach Anspruch 8, **dadurch gekennzeichnet, dass** das zusätzliche Bewehrungselement (10) als Draht, Stab (10a), Seil, Kette oder Roving ausgebildet ist, wobei das zusätzliche Bewehrungselement (10) vor, während oder nach dem Drucken jeder Lage (3) eingebracht, insbesondere eingelegt oder aufgelegt wird.

10. Verfahren nach einem der vorstehenden Ansprüche, **dadurch gekennzeichnet, dass** das aushärtbare Material mit Fasern insbesondere Stahlfasern, Polymerfasern, Glasfasern oder Carbonfasern versetzt ist.

## Claims

1. Method for producing a component (1) from a curable material, wherein a new layer (2) of the material is printed in periodically recurring steps in a 3D printing process onto a layer (3) located thereunder having lower reinforcing elements (4) which protrude above the top of this new layer (2), wherein after each layer (3) has been printed, upper reinforcing elements (5) are connected to the lower reinforcing elements (4) so as to extend said lower reinforcing elements and to form the lower reinforcing elements of the subsequent layer, **characterized in that** a printhead (6) has no recess but a central region (8), which is designed to be flexible such that the reinforcing elements (4) protruding from the two subjacent strands of one layer (2, 3) conform flexibly to the inside of the printhead when the printhead travels over, wherein the flexible design of the printhead (6) is carried out by selecting a suitable material in the region of the central region (8), for example by a plastics material, silicone material or rubber material.

2. Method according to claim 1, **characterized in that** the curable material is concrete.

3. Method according to any of the preceding claims, **characterized in that** the reinforcing elements (4, 5) consist of a rigid material, in particular steel or plastics material.

4. Method according to any of the preceding claims, **characterized in that** the connection of reinforcing elements (4, 5) located one above the other is a weld connection or a screw connection or an adhesive connection.

5. Method according to any of the preceding claims, **characterized in that** the reinforcing elements (4, 5) extend perpendicularly to the layers (2, 3).

6. Method according to any of claims 1 to 4, **characterized in that** the reinforcing elements (4, 5) extend at an angle between 90° and 45° to the layers (2,3).

7. Method according to any of the preceding claims, **characterized in that** the reinforcing elements (4, 5) are rod-shaped.

8. Method according to any of the preceding claims, **characterized in that** at least one additional reinforcing element (10) is introduced into the layers (2, 3) so as to extend in a printing direction (11).

9. Method according to claim 8, **characterized in that** the additional reinforcing element (10) is designed as a wire, rod (10a), cable, chain or roving, wherein the additional reinforcing element (10) is introduced, in particular placed in or on, before, during or after the printing of each layer (3).

10. Method according to any of the preceding claims, **characterized in that** the curable material is mixed with fibers, in particular steel fibers, polymer fibers, glass fibers or carbon fibers.

## Revendications

1. Procédé de fabrication d'une pièce (1) à partir d'un matériau durcissable, dans lequel, dans des étapes se répétant périodiquement, une nouvelle couche (2) du matériau est imprimée par un procédé d'impression 3D sur une couche (3) située en dessous avec des éléments d'armature inférieurs (4) qui dépassent au-delà de la face supérieure de ladite nouvelle couche (2), dans lequel, après l'impression de chaque couche (3), des éléments d'armature supérieurs (5) sont reliés aux éléments d'armature inférieurs (4) dans le prolongement de ces derniers et forment les éléments d'armature inférieurs de la couche suivante, **caractérisé en ce qu'**une tête d'impression (6) ne présente pas d'évidement mais une zone centrale (8) qui est conçue flexible, de telle sorte que les éléments d'armature (4) dépassant des deux barres situées en dessous d'une couche (2, 3), pendant le passage au-dessus de ceux-ci par la tête d'impression (6), épousent la forme de la face intérieure de cette dernière de manière flexible, dans lequel la conception flexible de la tête d'impression (6) s'effectue par la sélection d'un matériau adapté dans la zone de la zone centrale (8), par exemple par un matériau en matière plastique, en silicone ou en caoutchouc.

2. Procédé selon la revendication 1, **caractérisé en ce que** le matériau durcissable est du béton.

3. Procédé selon l'une des revendications précédentes, **caractérisé en ce que** les éléments d'armature (4, 5) sont constitués d'un matériau rigide, en particulier d'acier ou de matière plastique.

4. Procédé selon l'une des revendications précédentes, **caractérisé en ce que** la liaison d'éléments d'armature (4, 5) situés les uns au-dessus des autres est une liaison par soudage ou une liaison par vissage ou une liaison par collage.

5. Procédé selon l'une des revendications précédentes, **caractérisé en ce que** les éléments d'armature (4, 5) s'étendent perpendiculairement aux couches (2, 3).

6. Procédé selon l'une des revendications 1 à 4, **caractérisé en ce que** les éléments d'armature (4, 5) s'étendent selon un angle compris entre 90° et 45° par rapport aux couches (2, 3).

7. Procédé selon l'une des revendications précédentes, **caractérisé en ce que** les éléments d'armature (4, 5) sont en forme de tige.

8. Procédé selon l'une des revendications précédentes, **caractérisé en ce qu'**au moins un élément d'armature supplémentaire (10) est placé dans les couches (2, 3) de manière s'étendant dans une direction d'impression (11).

9. Procédé selon la revendication 8, **caractérisé en ce que** l'élément d'armature supplémentaire (10) est réalisé sous la forme d'un fil, d'une tige (10a), d'un câble, d'une chaîne ou d'un stratifil, l'élément d'armature supplémentaire (10) étant placé, en particulier inséré ou posé, avant, pendant ou après l'impression de chaque couche (3).

10. Procédé selon l'une des revendications précédentes, **caractérisé en ce que** le matériau durcissable est mélangé avec des fibres, en particulier des fibres d'acier, des fibres polymères, des fibres de verre ou des fibres de carbone.
